# EUROPEAN PATENT APPLICATION

(11) **EP 4 209 931 A1**
(43) Date of publication of application: **12.07.2023**
(21) Application number: 22150577.9
(22) Date of filing: 07.01.2022
(51) Int. Cl.: G06F 16/904

(54) **METHOD FOR ACCESSING CONTENT ITEMS**

(71) Applicant: Baxter Medical Systems GmbH + Co. KG, 07318 Saalfeld (DE)
(72) Inventor: SCHMOTZ, Christoph, 07318 Saalfeld (DE); DALBERT, Heinz-Hermann, 07318 Saalfeld (DE)
(74) Representative: Attfield, Andrew John

(57) **Abstract**

A method for accessing healthcare facility content items is provided. Each content item is assigned to at least one category from a first field and to at least one category from a second field. The method comprises receiving, from a user, an input selecting a first category from the first field; receiving, from the user, an input selecting a second category from the second field; and presenting two or more content items assigned to the second category to the user for access. At least one of the two or more content items is also assigned to the first category and at least one of the two or more content items is not assigned to the first category. At least one content item assigned to both the first category and the second category is presented more prominently than the at least one content item assigned to the second category and not the first category. A corresponding terminal, system and non-transitory memory are also provided.

## Description

### Technical Field

The present invention relates to the field of methods for accessing content items. In particular, for accessing content items of a healthcare facility based on categories to which the content items are assigned.

### Background

Healthcare facilities currently generate and make use of a great deal of information, provided and stored as a variety of content items in numerous different formats, both digital and physical. Due to the variety of formats of content items, it can be difficult for a healthcare professional or other user to access desired information. Even when digital copies of physical content items are stored, the lack of an effective structure for cross-linking content items means that related pieces of information stored as different can be difficult to find and access. This can prevent the timely and efficient provision of healthcare having a negative effect on patient outcomes.

### Summary of Invention

According to a first aspect of the present disclosure, a method for accessing healthcare facility content items is provided. Each content item is assigned to at least one category from a first field and to at least one category from a second field. The method comprises receiving, from a user, an input selecting a first category from the first field; receiving, from the user, an input selecting a second category from the second field; and presenting two or more content items assigned to the second category to the user for access. At least one of the two or more content items is also assigned to the first category and at least one of the two or more content items is not assigned to the first category. The at least one content item assigned to both the first category and the second category is presented more prominently than the at least one content item assigned to the second category and not the first category.

In this manner, a user can access a desired content item in a quick and efficient manner within minimal input. Furthermore, other relevant content is also displayed allowing a user to easily access relevant content in addition to the desired content item. This is particularly advantageous in a healthcare facility where quick and easy access to all of the relevant information enables medical professionals to make appropriate care decisions, improving patient outcomes.

Optionally, the method further comprises, between the steps of receiving, from the user, an input selecting a first category from the first field and receiving, from the user, an input selecting a second category from the second field, the steps of: determining each category from the second field to which one or more content items assigned to the first category are also assigned; and presenting the determined categories from the second field to the user for selection as the second category. In particular, only the determined categories from the second field may be presented to the user for selection as the second category.

In this manner, only relevant categories from the second field are presented to the user for selection after they have selected a first category. This enables the user to more efficiently access the desired content item as categories that cannot contain the desired content item (based on the selected first category) are not presented to the user, reducing the number of categories the user has to select from.

As an alternative to presenting only the determined categories from the second field to the user for selection as the second category, presenting the determined categories from the second field to the user for selection as the second category may comprise presenting the determined categories from the second field more prominently than remaining categories from the second field.

Presenting a second category more prominently can include presenting the second category in a different manner to less prominently presented categories such that is more visually striking to a user, such as in bold font, underlined, in a different colour font and the like. It can also involve changing the relative sizes of the presented second categories, such that those presented more prominently are larger than those presented less prominently. Presenting a second category more prominently than other categories can also include displaying the category closer to the top of a list or table relative to other categories being presented less prominently.

A link may be stored between each category from the first field and each category from the second field that have at least one content item assigned to them in common. Determining each category from the second field to which one or more content items assigned to the first category are also assigned may then comprise determining the categories from the second field that are linked to the selected category in the first field.

By linking the categories in the first and second fields that have a content item in common in this manner, the categories from the second field to which one or more content items assigned to the first category are also assigned can easily be determined by simply looking up the links between the selected first category.

Furthermore, storing links between the categories, rather than the individual content items themselves, provides a more efficient system in which fewer links are required to be stored, that remains quick and efficient to use. It also means that system on which the method is implemented is more flexible and scalable with additional content items being easy to incorporate. This is because new content items need only be assigned to one or more existing first categories and one or more existing second categories. This process is independent of the number of content items assigned in this manner.

Optionally, the method further comprises receiving contextual information, and the prominence of the content items that are presented to the user is further based on the contextual information.

Using contextual information can further aid in presenting the most relevant information to the user, reducing the time taken to find important information and thus improving patient outcomes. By receiving contextual information from one or more healthcare facility or external systems or networks, such as a healthcare facility intranet or the internet, the most relevant (or most likely to be the most relevant) content items can be presented most prominently even amongst content items that are otherwise identically linked to the selected first and second categories.

One example of contextual information can be a schedule, such as a schedule of operations in an operating room, a schedule of patients due to be seen by a healthcare professional, and the like. The prominence of the content items can then be determined based on the schedule, with content items related or relevant for upcoming schedule items being presented more prominently than those related or relevant for schedule items more distant in the future.

Other examples of contextual information can include one or more of: a user profile of the user; an operating room schedule; a location of the user; type of content; subject of content; and, a time and/or date.

The two or more content items presented to the user may be displayed in a list or table. Presenting content items more prominently can comprises displaying the content items closer the top of the list or table relative to content items displayed less prominently.

In this way, the most relevant content items are ensured to be in easy view of the user by being near the top of a list or table. This is particularly advantageous given that displays upon which content items will be presented to the user will be of finite size, particularly mobile devices and terminals such as tablets and mobile phones. Not all content items may be simultaneously presented to the user, and so some may only be accessed, for example, by scrolling or navigating to another page. By presenting the content items at the top of a list or table, these content items will be immediately accessible without the need for further navigation or scrolling.

The method may further comprise, subsequent to the step of presenting two or more content items assigned to the second category to the user, the step of: receiving, from a user, an input selecting one of the two or more content items; and accessing the selected content item.

In preferable embodiments, the user can access any content item using only three selection actions. This is achieved by assigning each content item to a first and second category. It is further aided by receiving contextual information, particularly in the case where there are a large number of content items, as this can ensure that the desired content items are presented most prominently (such as on a first results page) for immediate access.

The user input may be received at a terminal, and the content items may be stored on a remote database or server. The method may, therefore, involve communication between the terminal and the remote database or server. This may be performed over a network, which may be a private network such as a healthcare facility intranet or a public network such as the internet. The content items may also be stored across more than one servers or databases, which may be managed by the healthcare facility or a third party.

The first field may represent a type of a content item. For example, categories in the first field, or types of content item, may comprise one or more of: news items; case cards; hygiene documentation; user manuals; patient workflows; patient positioning documentation; pathology documentation; and, implant guides.

The second field, on the other hand, may represent a subject of a content item. For example, categories in the second field, or subjects of content item, may comprise one or more of: type of surgery; type of medical procedure; type of treatment; type of drug; type of patient; and, type of equipment.

Having the first field represent a type of a content item and/or having the second field represent a subject of a content item provides an efficient structure for cross linking content items and enabling them to be efficiently and intuitively accessed by a user. This is especially so when the categories are tailored to those required in a healthcare facility.

According to a second aspect of the present disclosure, a terminal is provided. The terminal is configured to perform the method of the first aspect.

According to a third aspect of the present disclosure, a system comprising a terminal and one or more servers is provided. The system is configured to perform the method of the first aspect.

According to a fourth aspect of the present disclosure, a non-transitory computer readable memory is provided. The non-transitory computer readable memory has stored thereon instructions that, when executed by one or more processors, cause the one or more processors to perform the method of the first aspect.

It will be appreciated that features described in relation to one aspect of the present disclosure may also be applied equally to all of the other aspects of the present disclosure.

### Brief Description of the Drawings

The disclosure will be further described, by of example only, with reference to the accompanying drawings, in which:
Figure 1 illustrates a method according to aspects of the disclosure.
Figure 2 illustrates a method according to aspects of the disclosure.
Figures 3A-3C illustrate how a method according to aspects of the disclosure can be implemented.
Figure 3D illustrates how categories can be linked according to aspects of the disclosure.
Figures 4A-4C illustrate an application for implementing methods according to aspects of the disclosure.
Figure 5 illustrates an application for implementing methods according to aspects of the disclosure.

### Detailed Description of the Invention

According to the present invention, methods and systems are provided for accessing healthcare facility content items. Content items are, in this disclosure, understood to be any digitally accessible piece of content. For example, content items can include documents, such as Microsoft Word documents or Portable Document Format (PDF) documents, that are stored on a server or databased and are accessible using a computer terminal. Unless otherwise specified herein, the format or type of content item is not limited. Types of content item can include: text files, image files, video filed, audio files, other types of file, and combinations thereof.

Generally, in the context of content items that are desired to be accessed at a healthcare facility, content items will have be of a certain type and have cover a certain subject. The type of a content item relates to the sort of information that the content item contains. Examples of types of content item are news items, case cards, hygiene documentation, user manuals, patient workflows, patient positioning documentation, pathology documentation, and implant guides. A content item may fall into one or more of these categories. For example, a document may include information regarding patient workflows and patient positioning. The subject of a content item, on the other hand, relates to a particular subject that the content item relates to. Examples of subjects of content items include a type of surgery, treatment, or other medical procedure; a type of drug; a type of patient; and a type of equipment, medical or otherwise. Specific examples of content item subjects include colonoscopy (type of medical procedure) and ibuprofen (type of drug).

The type of content item represents a first field, whilst the subject represents a second field. Each content item is assigned to at least one first category of the first field and at least one second category of the second field. For example, a content item may relate to a case card (first field; type of content item) for a particular surgery (second field; subject of content item). Another example would be a user manual (first field; type of content item) for a particular piece of hospital equipment (second field; subject of content item). Each content item may be assigned to only one first category and only one second category, only one first category and more than one second category, more than one first category and only one second category, or more than one first category and more than one second category. Typically, there will be more categories in the second field than in the first field. It will be appreciated that whilst type and subject of content items are one possible combination for the first and second fields, in some cases other first fields and other second fields may be used.

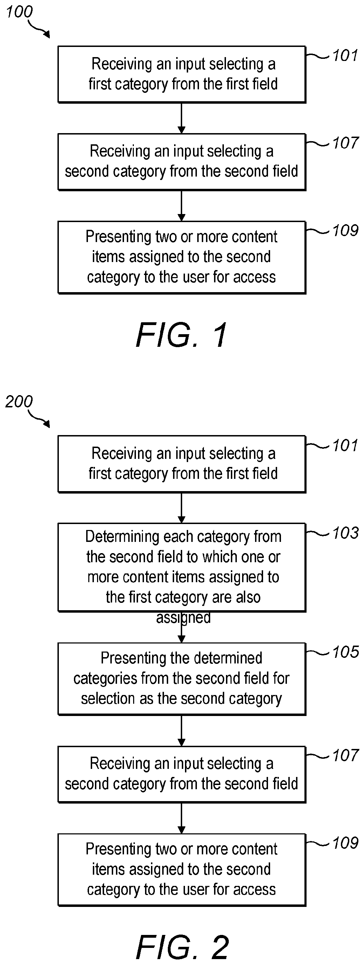

Assigning content items to a first category and a second category allows for efficient accessing of the content items. A general method for accessing content items assigned in this manner is illustrated in Figure 1. Figure 1 is a flow chart showing the steps of method 100.

The method 100 begins at step 101 wherein an input is received selecting a first category from a first field. The input is received from a user, for example, at a mobile terminal or other computer device, and may be in any appropriate form such as a touch or click with a mouse or other input device.

At step 107, another input is received from the user. The second input selects a second category from the second field. The input may be received in the same format as the first input or a different format.

Then, once the selection of a first and second category from the first and second fields respectively has been received, the method, at step 109, presents two or more content items that are assigned to the second category to the user. At least one of the two or more content items is also assigned to the first category (i.e., it is assigned to both the first category and the second category) and at least one of the two or more content items is not assigned to the first category (i.e., it is assigned to the second category but not the first category). The at least one content item that is assigned to both the first category and the second category is presented more prominently than the at least one content item assigned to the second category and not the first category.

The at least one content item assigned to both the selected first category and the selected second category is most likely to be the content item desired by the user, whereas the content item assigned to the selected second category but not the selected first category is less likely to be the immediately desired content item but is nevertheless likely to be a useful content item for the user. This is particularly so when the first field is a type of content item and the second field is a category of content item, because content items assigned to the selected second category but not the selected first category represent content items relating to different aspects of the same subject as the desired content item.

Presenting the content item(s) that are assigned to both of the selected categories more prominently than those assigned to only the selected second category ensures that the user can easily access the desired content item but can also access related content items to access supplementary information related to the information they are looking for. Presenting content items more prominently can include presenting the content item in a different manner to less prominently presented content items such that is more visually striking to a user, such as in bold font, underlined, in a different colour font and the like. It can also involve changing the relative sizes of the presented content items, such that those presented more prominently are larger than those presented less prominently. Presenting a content item more prominently than another content item can also include displaying that content item closer to the top of a list or table relative to other content items being presented less prominently. This is particularly advantageous given that displays upon which content items will be presented to the user will be of finite size, which may be of a size such that not all relevant content items can be displayed at once. This may be a particular problem in relation to mobile devices and terminals such as tablets and mobile phones. Not all content items may be simultaneously presented to the user due to the size of the screen, and so some may only be accessed, for example, by scrolling or navigating to another page. By presenting the desired content items at the top of a list or table, these content items will be immediately accessible without the need for further navigation or scrolling. Content items that are not assigned to the selected second category can be presented less prominently still than content assigned to the selected second category but not the selected first category, or such content items can be not displayed at all.

Once the two or more content items assigned to the second category are presented to the user, at step 109, the user is then able to access these content items by selecting them. For example, the user may then be navigated to a page displaying the content item, or a copy of the content item may be downloaded to the user's device. In this manner, any content item can be accessed using only three selection actions: the selection of a first category from the first field, the selection of a second category from the second field, and the selection of the content item to be accessed.

Another method according to the disclosure is shown in Figure 2. Figure 2 illustrates method 200, which comprises steps 101, 107 and 109 in common with method 100 of Figure 1. These steps are the same as those described with respect to method 100 and as such they are not discussed in detail again.

Once a first category from the first field has been selected at step 101, each category from the second field to which one or more content items assigned to the first category are also assigned is determined. These determined categories from the second field are then presented for selection by the user as the second category from the second field.

In some cases, only the second categories determined to have a content item assigned in common with the selected first category are presented to the user. This can help to guide the user through the process of selecting and accessing a content item by reducing the number of options available to be selected as the second category based on the selected first category.

Alternatively, the second categories that do not have a content item assigned to them in common with the selected first category can still be presented for selection, but they will be presented less prominently than those categories that do have a content item assigned in common with the selected first category. Presenting a second category more prominently can include presenting the second category in a different manner to less prominently presented categories such that is more visually striking to a user, such as in bold font, underlined, in a different colour font and the like. It can also involve changing the relative sizes of the presented second categories, such that those presented more prominently are larger than those presented less prominently. Presenting a second category more prominently than other categories can also include displaying the category closer to the top of a list or table relative to other categories being presented less prominently.

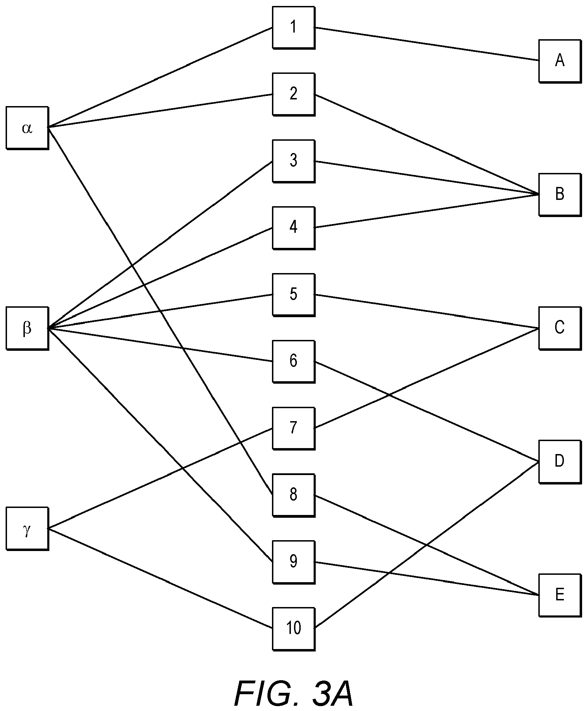

Figures 3A-3C provide another illustration of this method. These Figures show a representation of how the method can be applied in the case of three categories in the first field (represented by boxes α, β, and γ), five categories in the second field (represented by boxes A, B, C, D, and E), and ten content items (represented by boxes 1, 2, 3, 4, 5, 6, 7, 8, 9, and 10). It is noted that the illustration is exemplary only, and that the method can be used with more or fewer categories in the first field, the second field, or content items. The method is not limited in this regard. Further, it is noted that in the illustrated example, each content item is only assigned to one category in the first field and one category in the second field. However, again this is exemplary only and that content items may be assigned to multiple categories in each for the first and second fields if appropriate, depending upon the content item and the categories in each field.

Figure 3A illustrates the categories in the first field and the second field to which each content item is assigned. Content item 1 is assigned to category α in the first field and category A in the second field, content item 2 is assigned to category α in the first field and category B in the second field, content item 3 is assigned to category β in the first field and category B in the second field, and so on. Equivalently, it can be said that category α of the first field has content items 1, 2, and 8 assigned to it, category β of the first field has content items 3, 4, 5, 6, and 9 assigned to it, and so on, whilst category A of the second field has content item 1 assigned to it, category B of the second field has content items 2, 3, and 4 assigned to it, and so on.

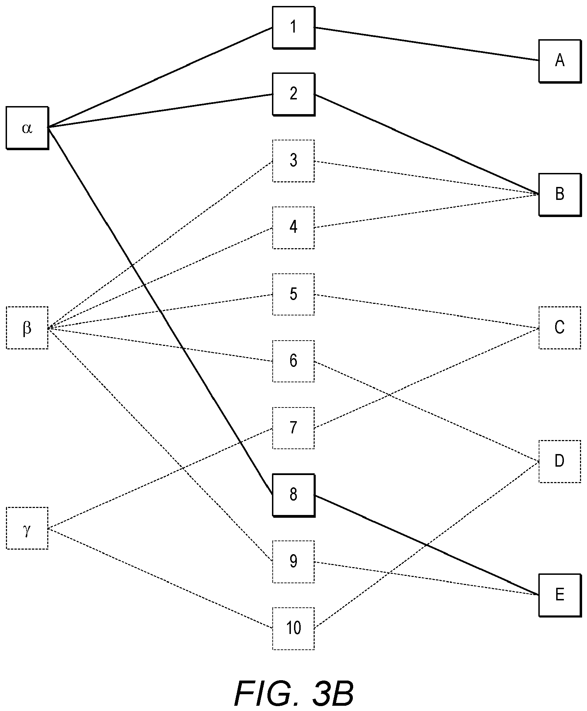

If, at step 101, the user selects category α of the first field, then at step 103 it is determined which categories from the second field have a content item assigned to them in common with category α of the first field. This is illustrated in Figure 3B. Category α of the first field has content items 1, 2, and 8, represented by the solid lines. The other categories in the first field, and the content items not assigned to category α of the first field are shown in dotted lines. As can be seen, the categories of the second field that have content items assigned in common with the selected category of the first field (category α) are categories A, B and E of the second field. These categories are also shown in solid lines, whilst the categories of the second field without a content item assigned in common with category α of the first field are shown in dotted lines. Specifically, category A has content item 1 assigned in common with category α, category B has content item 2 assigned in common with category α, whilst category E has content item 8 assigned in common with category α. Accordingly, at step 103 categories A, B and E are determined as the categories from the second field that have a content item assigned to them in common with category α from the first field, and then these categories are presented to the user for selection at step 105.

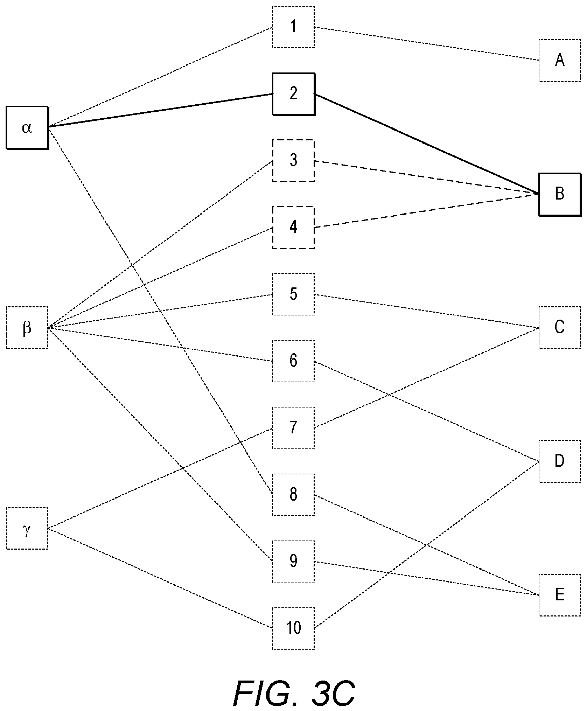

When the user selects one of the determined second categories, two or more content items assigned to the second category are presented for the user to access. In the example shown in Figure 3C, the user has selected category B from the second field. The content items assigned to category B are content item 2 (shown in solid a solid line) as well as content items 3 and 4 (shown in dashed lines). The content items not assigned to category B are shown in dotted lines. Hence, content items 2, 3 and 4 are presented to the user for access. In accordance with the method, the content items that are assigned to both the selected first category (category α) and the selected second category (category B) are presented more prominently than those content items assigned to the selected second category but not the selected first category. Accordingly, in the example of Figure 3C, content item 2 is presented more prominently that content items 3 and 4. This is because content item 2 is assigned to the selected first category (category α) and the selected second category (category B), whereas content items 3 and 4 are assigned to the selected second category (category B) but not the selected first category (both content items 3 and 4 are assigned to category β rather than the selected category, category α).

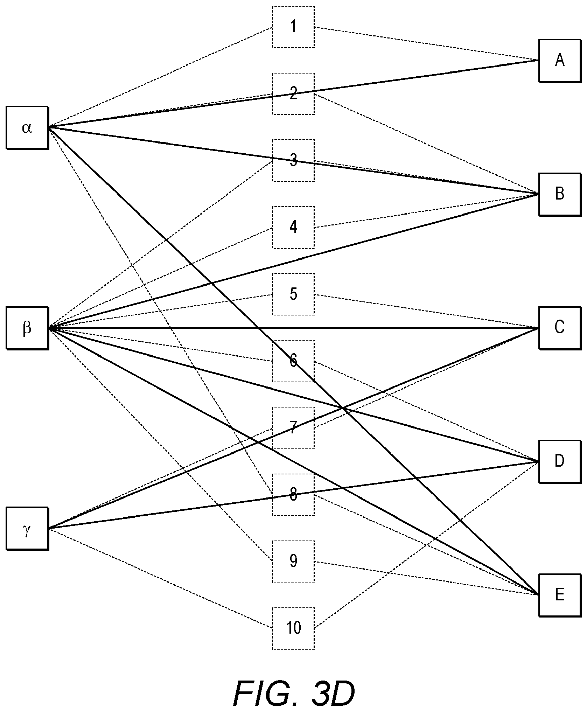

To aid in the determination of the categories of the second field that have a content item assigned in common with the selected category of the first field at step 103, a link can be stored between each category from the first field and each category from the second field that have at least one content item assigned to them in common. Figure 3D illustrates these links that may be stored. Looking at Figure 3D, it can be seen that category α in the first field is linked with categories A, B and E in the second field. This is because of content items 1, 2 and 8 respectively (this can be seen in Figure 3B). Storing links in this manner can be advantageous as, especially when there are a large number of content items, the number of links between categories in the first and second fields will be much fewer than the number of links between the categories and the content items themselves. This is in part because many content items will be assigned to the same pairs of categories, and yet these will only require one link to be stored between the categories. For example, category β is linked to category B by both content items 3 and 4, yet only one link is required between these categories.

In the case described in relation to Figures 3A-3D, ten content items were used as an example, and with the exemplary categories selected by the user illustrated in Figure 3B then three content items are presented to the user for accessing. However, it will be appreciated that in practice there may in fact be many more content items, and that a relatively large number of content items will be presented to the user. Depending upon the size of the screen of the device upon which the content items are presented to the user, it may frequently be the case that not all of the content items to be presented to the user can reasonably be displayed at the same time on the screen. That is, the content items must be presented large enough that they can be seen by the user, and in some cases touched (e.g., for selecting that content item on a touch screen device). Hence, only a finite number of content items will be able to be presented on a screen at once. Accordingly, it may be necessary for the content items to be arranged across different pages that the user can navigate between, or the content items may be displayed in a continuous manner that the user can scroll through, or some combination of the above.

To reduce the likelihood that the user will need to extensively navigate in this manner to find relevant content items that the wish to access, contextual information can be obtained and used to sort or order, for example, the content items presented to the user. That is, contextual information can be used to help determine the prominence of the presented content items relative to one another.

Contextual information refers to information about the user using the method or the setting in which the method is used, and can be automatically obtained and used without the user providing any specific input. Contextual information can include the date, time and location at which the method is used, the type of device used, information about the user (e.g., based on a user profile), information about or from the healthcare facility, and the like. The contextual information can be used to determine which content items will likely be of interest or use to the user, so that two content items which otherwise would be presented with the same level of prominence (that is, there is no other reason why one should be presented more prominently than the other) can instead be presented in a prominence order reflecting the likelihood of the user wanting to access the different content items.

In one example, contextual information includes a current time, a user profile identifying the user as a particular surgeon, and a schedule for that surgeon. By comparing the current time with the schedule for the surgeon, it can be determined that the surgeon is about to perform a particular type of surgery. Content items that relate to information that the surgeon may need prior to performing the surgery can be prioritised over those that relate to information that the surgeon will likely not need until after the surgery and hence be presented more prominently.

In another example, a location of the device using the method could be used instead of a user profile of the user, and the schedule may be for an operating room rather than a particular surgeon. In this case, if the location of the device is in or near a particular operating room then information relating to the next surgery to be performed there can be prioritised and presented more prominently than other information.

In some cases, contextual information may include information about a training state of the user. This may include information about the training in respect of a particular topic that the user has undertaken, training progress in a topic, and the like, including whether the user has reached a certain threshold (e.g., a specific number of hours or completing a particular training course). In particular, when combined with a schedule of a user (e.g., a surgeon) or of a, or part of a, healthcare facility (e.g., an operating room), as described above, content items relating to training can be presented more prominently where appropriate.

Specific examples of how information about a training state of the user can be used include presenting the next training module in a training course more prominently than training modules already taken or to be taken after the next training module; presenting content items with training content that are relevant for upcoming activities based on a schedule of the user or of a location in the healthcare facility (which can also take into account the time since the last piece of relevant training was completed); presenting content items that relate to training courses that have not been completed or need to be refreshed more prominently than those content items that relate to training courses that are completed or up to date.

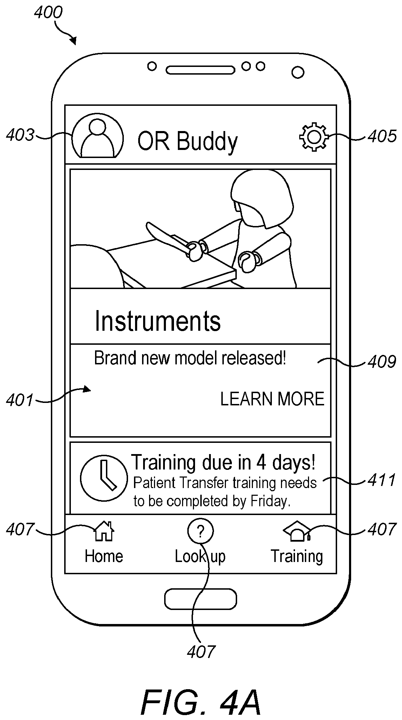

The methods described above may be implemented via an application, such as an application on a mobile phone or a web application. Advantageously, the method can be utilised on a variety of devices allowing users flexibility in the way in which they access content items. For example, users may have the option to utilise the method via an application on a mobile phone or via a web application on a computer. Figures 4A-4C illustrate an example application implemented on a mobile terminal, such as a mobile phone.

Figure 4A illustrates a mobile terminal 400 having a screen 401. In this example, the screen 401 is a touchscreen, and the buttons discussed below are implemented as touch buttons, though this should not be considered to be limiting and other forms of button and input can be used.

The screen 401 displays a home screen of the application. The home screen may have a number of features, in this case a user profile button 403, a settings button 405, and a number of navigation buttons 407. The home screen may also display content items, such as content item 409, or display notifications, including reminders, such as training reminder 411. It will be appreciated that while a certain layout of the home screen is shown, this is intended to be illustrative only, as are the specific designs of the icons used for the various buttons.

The user profile button 403 can allow the user to view their user profile, including their user information. This may include, but need not be limited to, their name, role, age, sex, address, contact details, and so on. In some cases, the user may also be able to edit their use information through user profile button 403. This information can be included in the contextual information taken into account when determining the prominence order of content items to be presented to the user. The user information will generally be stored on one or more servers or databases remote from mobile terminal 400, which may be accessed over one or more networks that connect the mobile terminal 400 and the one or more servers or databases, including but not limited to healthcare facility intranets and external networks such as the internet.

The settings button 405 can be used to change one or more settings on the application, including accessibility settings, notification settings and the like.

Navigation buttons 407 enable the user to navigate to different pages of the application. In this example, the leftmost button allows the user to navigate to the home screen, the middle button allows the user to navigate to a search screen for searching for content items, whilst the rightmost button allows the user to navigate to a training screen.

The content items 409 that are presented on the home screen may be determined based on a number of factors. For example, they may be determined based on preferences that the user has set, for example, a user may set that they wish to see content items relating to a particular topic. They may also be based on a length of time that the content item has been available through the application, for example, recently accessible content items may be displayed to make the user aware that they are now available. They may also be based on contextual information, as described above. For example, content items related to an upcoming surgery a user is to perform may be presented.

The notifications 411 displayed may be also be based on a variety of considerations. For example, they may remind the user to complete training, about upcoming engagements, general or specific messages or alerts, and the like. The notifications 411 may be based on the user information and contextual information, amongst other things.

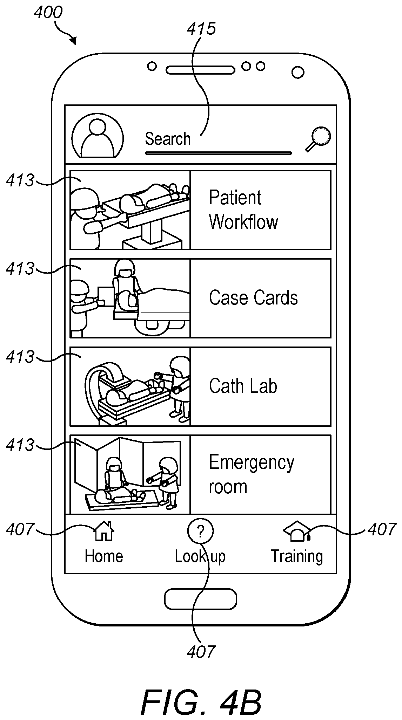

Figure 4B illustrates a search screen. In this example, the search screen comprises a search bar 415 and a number of buttons 413 representing categories in the first field. In this case, the categories are "Patient Workflow", "Case Cards", "Cath Lab", and "Emergency Room". It will be appreciated that in some cases only the search bar 415 or the buttons 413 may be present.

The user may being implementing the methods described with respect to Figures 1-3 on the search screen. This may be done by firstly selecting one of the buttons 413 representing categories in the first field. By selecting one of the buttons 413, e.g., though a touch input action, the user can input a selection of a first category in the first field in accordance with step 101 of Figure 1. The application can then display the categories of the second field on a similar screen to that illustrated in Figure 4B, and the user can then select a button representing a category of the second field in accordance with step 107 of Figure 1. The application can then display two or more content items, as per step 109 of Figure 1, for the user to access.

Rather than directly selecting a first category from those presented as a button 413 on the search screen, however, the user may utilise the search bar 415 first, or instead. This is particularly helpful when not all of the categories that could be selected by the user can be displayed. The user can input a search term into the search bar 415 and the application can then display categories relevant to the search term. For example, if the search term was "Patient Positioning" then a button corresponding to the category "Patient Positioning" can be displayed for selection by the user. In this case, both the buttons 413 and the search bar 415 are used by the user. However, in some cases only the search bar 415 may be used, for example, if the user inputs a search term identical to, or sufficiently similar to, a category that can be selected. In this case, the inputting of the search term may be used as the selection of the corresponding category as the first category in the first field, or the second category in the second field, as the case may be.

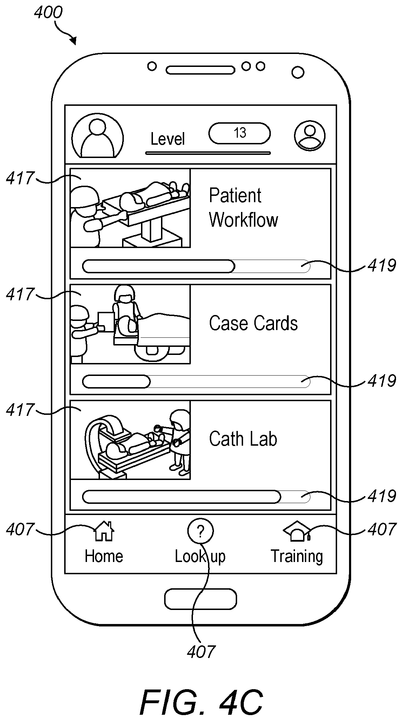

The third screen, shown in Figure 4C, is a training screen. Here, information relating to training is presented and can be accessed directly. Advantageously, the training information is specific to the user, i.e., is based on the user information. Here, a number of buttons 417 are provided that allow access to training content items. The content items can be accessed in accordance with the methods described above in relation to Figures 1-3, and as implemented as described with respect to Figure 4B, but only training content items can be presented to the user. In this sense, the content items are filtered so that only training content items can be accessed in this manner.

A user may have one or more training courses to complete, or have to log or record a certain number of hours of training on a topic or otherwise meet a training requirement threshold. The application can monitor the training performed through the application (e.g., by accessing and completing an interactive training module, by accessing and watching a training video, and the like) and record the training. The user's training progress for different topics can be illustrated in the application, for example, in the form of progress bars 419. This can give the user a quick and easy way to monitor their training progress.

If the training is monitored through the application in this manner, then this information can also me made accessible to managers, regulators, and the like, to ensure compliance with training requirements. Accordingly, it can be ensured that users keep up to date on their training requirements. If a user does not keep up to date on their training, then a manager can take appropriate action, including causing a notification to be presented to the user informing them that they are required to complete training.

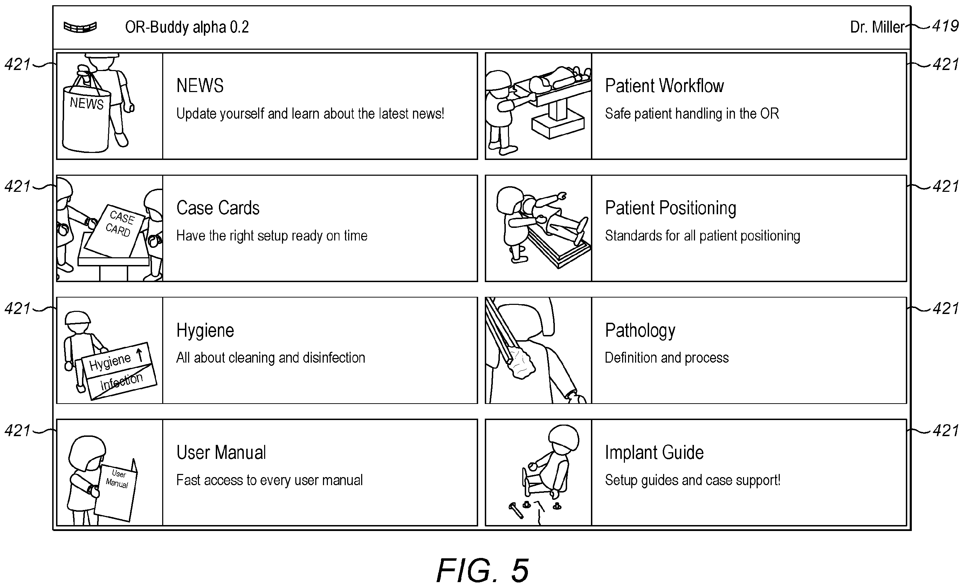

As noted above, the application can be implemented on a variety of different devices, such as a terminal, mobile terminal or other device. Suitable devices include, but are not limited to, mobile phones, laptop computers, and desktop computers. Figures 4A-4C illustrated aspects of an application for implementing the methods described herein implemented on a mobile terminal. Figure 5 provides an illustration for how the application could be implemented on a computer, such as a laptop or desktop, or other terminal with a comparable size of screen.

Figure 5 shows a screen having eight buttons 421 displayed. These buttons 421 are equivalent to the buttons 413 illustrated in Figure 4B and represent different categories in the first field that can be selected at step 101 of the method of Figures 1-3. In this case, the eight categories are "News", "Case Cards", "Hygiene", "User Manual", "Patient Workflow", "Patient Positioning", "Pathology", and "Implant Guide", though it will be understood that alternative or additional categories can be used. In particular, a healthcare facility may be able to customise the categories in each field. Due to the larger screen size of a computer, compared with a mobile terminal, more categories can be displayed simultaneously for selection by the user, in this case in two columns of four categories each. It will be noted that, compared to the search screen shown in Figure 4B, no search bar is provided in the screen shown in Figure 5. This may be because every category in the first field is already displayed, meaning that the user can select any category without the need for searching, as a result of the increased screen size. In other cases, however, a search bar may again be provided.

After selecting a first category in the first field, the application can then display the categories of the second field on a similar screen to that illustrated in Figure 5. The user can then select a button representing a category of the second field in accordance with step 107 of Figure 1. The application can then display two or more content items, as per step 109 of Figure 1, for the user to access. The selection actions may be input by the user in a variety of methods, including, but not limited to, using a touch action on a touch screen, a mouse, or a keyboard.

Also presented on the screen illustrated in Figure 5 is a name 419 of a user currently logged in on the device through which the application is being accessed. It is particularly advantageous to display the name of the user logged in when the application is accessed on a computer or similar device because these are more likely to be devices that are shared by multiple users, compared to a mobile terminal, such as a mobile phone, which tend to be personal devices with only one user. Displaying the name of the user currently logged on enables the user to quickly verify that they are logged on with their account.

It will be noted that whilst the application may be implemented differently on different devices, particularly devices with different screen sizes, the underlying application may be the same in each case but simply rescaled, or programmed to apply a different layout or formatting based on screen size. Accordingly, a user may seamlessly transition between the application on different devices.

The methods described herein may be performed on a single computing device (on one or more processors), or across multiple computing devices in a distributed system. Such a distributed system may be connected by a local area network or a wide area network. The methods may also take advantage of cloud computing services to perform one or more steps of the method. In particular, one or more servers or databases may be used to process the requests made by the user, to host some or all of the application, and/or to store and allow access to the content items.

The content items can be stored on a single database or across multiple databases, which may be managed by the healthcare centre or externally. Different healthcare facilities may utilise the same databases, different databases, or a mixture of the same and different databases. In one example, a healthcare facility making use of the methods described herein may initially start with a basic database with a limited set of content items, and then may add, or request the addition, of further content items to the database, or may request access to additional databases with further content items. In this manner, a healthcare facility may customise the content items that are available to be accessed by a user of the application in that facility.

Content items can be added to a database in a number of ways. Content items that are available digitally over a network, such as content items uploaded to a website or otherwise accessible over the internet, can be added by linking to the content item. However, this may mean the content item would no longer be accessible if the linked to page is moved or removed. Alternatively, the content item can be downloaded and then stored on a database. This can also allow the content item to be converted into a desired format. For example, a webpage with text and images could be converted into a PDF for storage.

Content items can also be added at the request of a user, or by digitising non-digital content items. For example, when a piece of equipment is purchased by a healthcare facility, the instructional manual may be scanned and digitised for storage as a content item in the database. Preferably, all content items in the database are stored (being converted where required) in the same format. This ensures that each content item can be accessed by every device as there will not be compatibility issues due to different formats. In some cases, a selection of predefined formats will be acceptable, such as a format for documents, a format for videos, and a format for audio.

The new content items then need to be assigned to at least one category in the first field and at least one category in the second field. This can be done manually by a user, but is preferably done using some form artificial intelligence to assist in the assignment of content items to categories. In particular, artificial intelligence can be used to assign one or more likely categories, and then an administrator can approve them or modify them as needed. In some cases, this task may be given to users, who after selecting a content item may be prompted to provide information about whether it has been assigned to the correct categories. It will be understood that pre-existing and well-known artificial intelligence techniques, such as machine learning techniques, can be used to assist the categorisation of new content items in this manner. Accordingly, such techniques are not described in further detail herein.

## Claims

1. A method for accessing healthcare facility content items, wherein each content item is assigned to at least one category from a first field and to at least one category from a second field, the method comprising:
receiving, from a user, an input selecting a first category from the first field;
receiving, from the user, an input selecting a second category from the second field; and
presenting two or more content items assigned to the second category to the user for access;
wherein at least one of the two or more content items is also assigned to the first category and at least one of the two or more content items is not assigned to the first category; and
wherein the at least one content item assigned to both the first category and the second category is presented more prominently than the at least one content item assigned to the second category and not the first category.

2. The method of claim 1, wherein the method further comprises, between the steps of receiving, from the user, an input selecting a first category from the first field and receiving, from the user, an input selecting a second category from the second field, the steps of:
determining each category from the second field to which one or more content items assigned to the first category are also assigned; and
presenting the determined categories from the second field to the user for selection as the second category.

3. The method of claim 2, wherein presenting the determined categories from the second field to the user for selection as the second category comprises presenting only the determined categories from the second field to the user for selection.

4. The method of claim 2, wherein presenting the determined categories from the second field to the user for selection as the second category comprises presenting the determined categories from the second field more prominently than remaining categories from the second field.

5. The method of any of claims 2 to 4, wherein a link is stored between each category from the first field and each category from the second field that have at least one content item assigned to them in common; and
wherein determining each category from the second field to which one or more content items assigned to the first category are also assigned comprises:
determining the categories from the second field that are linked to the selected category in the first field.

6. The method of any preceding claim, wherein the method further comprises receiving contextual information, and wherein the prominence of the content items that are presented to the user is further based on the contextual information.

7. The method of claim 6, wherein contextual information includes one or more of: a user profile of the user; an operating room schedule; a location of the user; type of content; subject of content; and, a time and/or date.

8. The method of any preceding claim, wherein the two or more content items presented to the user are displayed in a list or table, wherein presenting content items more prominently comprises displaying the content items closer the top of the list or table relative to content items displayed less prominently.

9. The method of any preceding claim, wherein the method further comprises, subsequent to the step of presenting two or more content items assigned to the second category to the user, the step of:
receiving, from a user, an input selecting one of the two or more content items; and
accessing the selected content item.

10. The method of claim 9, wherein the user can access any content item using only three selection actions.

11. The method of any of claims 2 to 10, wherein the user input is received at a terminal, and wherein the content items are stored on a remote database or server.

12. The method of any preceding claim, wherein the first field represents a type of a content item; and wherein optionally categories in the first field comprise one or more of: news items; case cards; hygiene documentation; user manuals; patient workflows; patient positioning documentation; pathology documentation; and, implant guides.

13. The method of any preceding claim, wherein the second field represents a subject of a content item; wherein optionally categories in the second field comprise one or more of: type of surgery; type of medical procedure; type of treatment; type of drug; type of patient; and, type of equipment.

14. A terminal, or system comprising a terminal and one or more servers, configured to perform the method of any of claims 1 to 13.

15. A non-transitory computer readable memory having stored thereon instructions that, when executed by one or more processors, cause the one or more processors to perform the method of any of claims 1 to 13.
